# EUROPEAN PATENT APPLICATION

(11) **EP 4 807 931 A1**
(43) Date of publication of application: **16.09.2026**
(21) Application number: 26163531.2
(22) Date of filing: 10.03.2026
(51) Int. Cl.: H02J 1/108, H02J 1/14, H02J 13/34

(54) **SYSTEMS AND METHODS FOR CONFIGURABLE SOLID STATE POWER CONTROLLERS**

(30) Priority: 12.03.2025 US 202519077828
(71) Applicant: GE Aviation Systems Limited, Bishops Cleeve Cheltenham Gloucestershire GL52 8SF (GB)
(72) Inventor: ROPER, Simon Edward, Cheltenham, GL52 8SF (GB); HANDY, Peter James, Cheltenham, GL52 8SF (GB); AMBROSE, Christopher, Cheltenham, GL52 8SF (GB)
(74) Representative: Openshaw & Co.

(57) **Abstract**

There are provided systems and methods for combining outputs of solid state power controllers into a single output. The system may include: a power distribution unit (101) configured for operative coupling to a power source (104) and to load(s) (106); a first solid state power controller (302) at the power distribution unit, the first solid state power controller (302) having a first output (304) and a first current rating; a second solid state power controller (306) at the power distribution unit, the second solid state power controller (306) having a second output (308) and a second current rating; and a single switched output (305) at the power distribution unit operatively coupled to the first and second solid state power controllers (302, 306), the single switched output (305) having a single output current rating.

## Description

### TECHNICAL FIELD

These teachings relate generally to electrical power distribution systems, and specifically to configuring solid state power controllers in electrical power distribution systems.

### BACKGROUND

Power distribution units are used in various contexts to distribute electrical power to multiple separate systems. In certain contexts, these power distribution units may include solid state power controllers (SSPC) that operate as switches to distribute power from a power source to designated loads. For example, SSPCs are often used in aerospace applications, which have systems with high voltages, high currents, and/or reliable switching.

Often, a power distribution unit (or box) may have multiple installed or preset SSPCs of different predetermined current ratings. Sometimes, these ratings do not match the loads in proximity to the distribution box, which may lead to compromises in the distribution box specifications. It would be desirable to have a flexible and configurable approach that combines SSPCs together to provide a single switched output of a higher current rating that is robust and tolerant to a wide range of loads and short circuits without a need to change the circuit board design or software source code. In the context of aerospace, it would be desirable to develop a fast and low cost approach to adjusting power distribution units to match the load requirements of a specific aircraft or to adapt to load changes throughout the life of the aircraft development program.

### BRIEF DESCRIPTION OF DRAWINGS

Various needs are at least partially met through provision of configurable SSPCs, as described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of an electrical power distribution system in accordance with various embodiments;
FIG. 2 is a circuit diagram showing parallel switches in accordance with various embodiments;
FIG. 3 is a circuit diagram showing SSPCs with a single switched output and that may use N-type FET(s) in accordance with various embodiments;
FIG. 4 is a circuit diagram showing SSPCs with a single switched output and that may use P-type FET(s) in accordance with various embodiments;
FIG. 5 is a schematic view showing a circuit diagram with SSPCs having single switched outputs in accordance with various embodiments;
FIG. 6 is a schematic view showing SSPCs with single switched outputs in accordance with various embodiments;
FIG. 7 is a graph showing current versus time in accordance with various embodiments;
FIG. 8 is a graph showing current versus time in accordance with various embodiments;
FIG. 9 is a flow diagram of a process in accordance with various embodiments;
FIG. 10 is a flow diagram of a process in accordance with various embodiments;
FIG. 11 is a flow diagram of a process in accordance with various embodiments; and
FIG. 12 is a flow diagram of a process in accordance with various embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The following embodiments illustrate approaches for the flexible configuration and combination of outputs of SSPCs in power distribution units. A solid state power distribution unit often has multiple SSPCs with switches having predefined current ratings that may be intended for certain loads. The current ratings of switches may be sized by the number of SSPCs connected in parallel, so, for example, if each SSPC is rated at 5A each ("A" refers to Amperes herein when referring to current), connecting two in parallel creates a 10A switch. For existing SSPC designs, this paralleling may be done at the schematic level, and the switch rating is fixed for that board layout, component population, and controlling software. This disclosure addresses paralleling of outputs internally within power distribution units, but without significant changes to circuit board layout, components, and source code. It is generally contemplated that this paralleling of outputs may allow for quicker implementation, lower development costs, better scalability, and/or more flexibility regarding the power distribution units.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise. Reference throughout this specification to "one embodiment," "an embodiment," "some embodiments", "one form," "a form," "some forms", "an implementation", "some implementations", "some applications", or similar language means that a particular feature, structure, or characteristic described in connection with the embodiment is included in at least one embodiment of the disclosure. It does not mean that the particular feature, structure, or characteristic is required in all embodiments of this disclosure.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

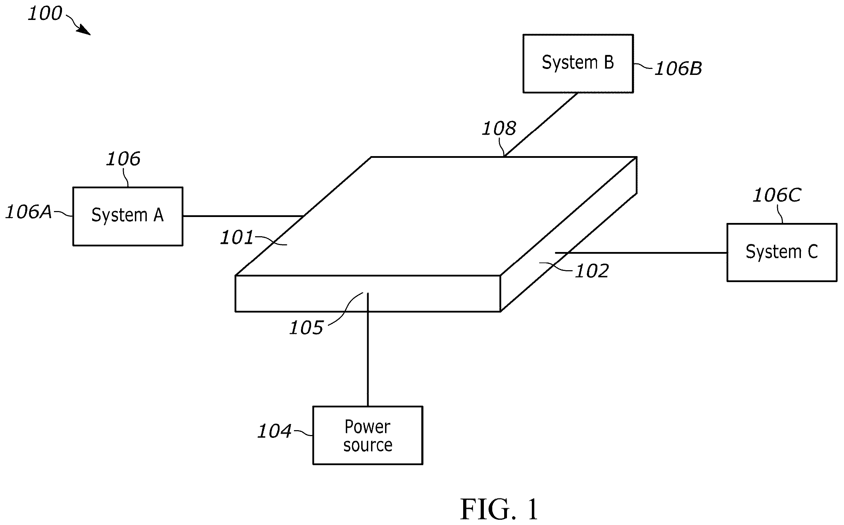

The foregoing and other benefits may become clearer upon making a thorough review and study of the following detailed description. FIG. 1 shows a power distribution unit 101 containing SSPCs that is part of an electrical distribution system 100. Electrical distribution systems 100, such as in aircraft, may use power from one or more sources and distribute power to one or more loads. Power sources may be primary sources, such as, for example, batteries or power cells, or may be outputs of other parts of the overall system. Loads may utilize power or may be an intermediate stage in the overall system.

In some embodiments, the power distribution unit 101 is in the form of an enclosed module 102 that houses SSPCs therein. The power distribution unit 101 may be coupled to a power source 104 via a power input interface 105. The module 102 may also be coupled to, and distribute power to, multiple systems, or loads 106, such as System A, System B, and System C, via multiple power output interfaces 108. In other words, the power distribution unit 101 may be operatively coupled to the power source 104 and the plurality of loads 106A, 106B, and 106C. It should be understood that the electrical distribution system 100 is shown at a schematic level and may include other aspects and components that are not necessary for an understanding of this subject matter.

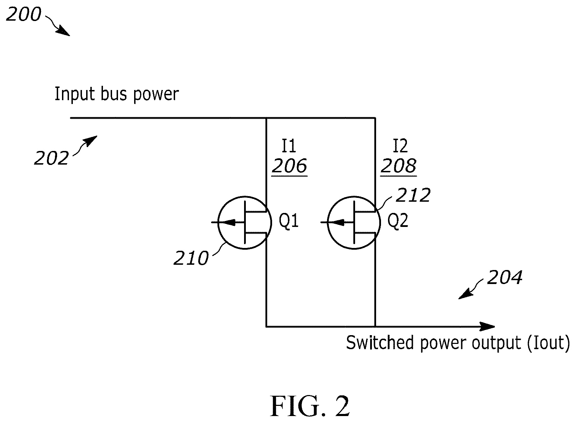

FIG. 2 illustrates multiple switching elements in parallel that may create a higher performance output. FIG. 2 shows input bus power 202, switched output current Iₒᵤₜ (204), current I1 (206), and current I2 (208). Many SSPC designs use a fast trip function. The SSPC measures the current, and if the current is over a specific level, the SSPC will trip. For example, on a 5A SSPC, the fast trip may be set at 50A. If this type of design is paralleled together, both SSPCs share current perfectly for it to work effectively as a high rated single switched output. In reality, the natural variations between the SSPCs, due to, for example, manufacturing tolerances in the switches (such as, for example, field effect transistors (FETs)) Q1 (210) and Q2 (212) and in the output wiring will reduce current sharing and the SSPC trip will cascade before reaching the full fast trip limit of the combined SSPC.

As addressed further below, in one form, this disclosure uses a current limiting approach to ensure that the combined SSPCs work together to provide a robust single switched output of a higher current rating, which accommodates the natural variation in the switches and SSPCs. Using the example above, the SSPC with the higher current passing therethrough (Q2) (212) will current limit first, then forcing additional current through Q1 (210). In this example, for two 5A SSPC with a trip threshold at 50A each, this current limiting enables the combined switched output (10A SSPC) to trip at 100A. The transient energy is therefore spread across both switches and significantly minimizes the risk of nuisance trips. Both switches are turned on with minimal and deterministic latency, such as, for example, with a similar and consistent amount of delay, so that they are turned on at the same time or about the same time as to ensure current sharing.

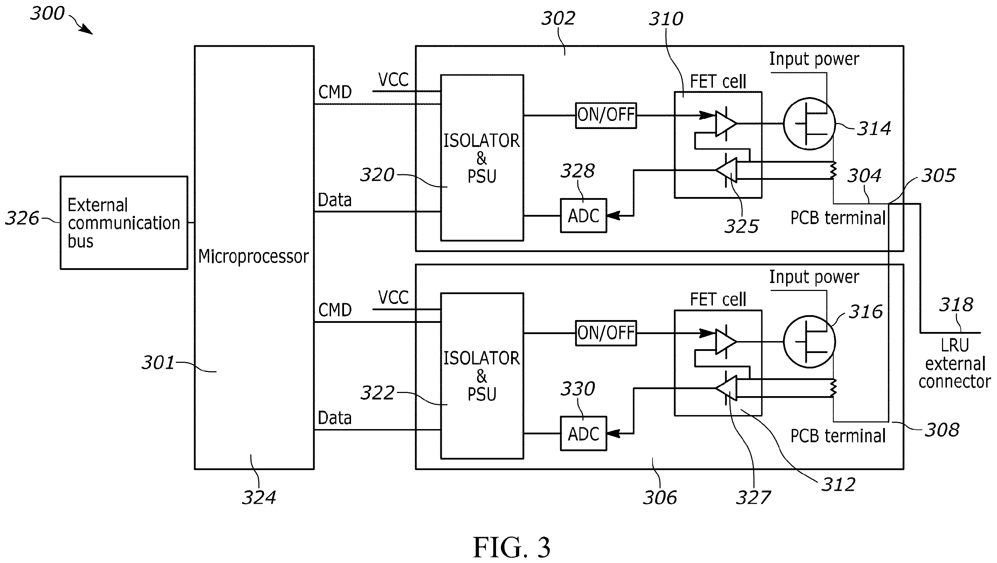

FIG. 3 shows an example of two SSPCs reconfigured into a single switched output 305 by means of a wiring change. In the system 300 of FIG. 3, a first SSPC 302 has a first SSPC output 304 and a first current rating, and a second SSPC 306 has a second SSPC output 308 and a second current rating. In this example, the two SSPCs 302, 306 include FET cells 310, 312 and FET switching components 314, 316, respectively. Although this particular example uses N-type FETs for switching components 314, 316, it should be understood that any of various types of transistors (such as BJTs, JFETs, MOSFETs, IGBTs, etc.) and other types of SSPCs may be used.

In FIG. 3, the two SSPCs 302, 306 include a single switched output 305. The first SSPC output 304 and the second SSPC output 308 are coupled to a single switched output 305, which, in turn, is coupled to an output connector 318. It should be understood that the first and second SSPC outputs 304, 308 may be coupled directly to the output connector 318 so the single switched output 305 may be located at a pin of the output connector 318. In other words, the system 300 includes a single switched output 305 coupled to the first and second SSPCs 302, 306 with the single switched output 305 having a single output current rating, and an output connector 318 is operatively coupled to the single switched output 305. In one form, the output connector 318 may be an external connector of the power distribution unit, enabling transmission of power from the unit.

The SSPCs 302, 306 may include other components, such as, for example, an isolator and power supply unit (PSU) 320, 322 to provide an independent power supply for each N-type FET cell, and which may transmit ON/OFF signals. Other components may include amplifiers 325, 327 and analogy-to-digital converters (ADCs) 328, 330 to set and adjust the input current and/or voltage. For example, the amplifiers 325, 327 and ADCs 328, 330 may achieve closed loop current control to adjust the current that flows through the FET cells 310, 312. Output current may be measured and compared to the current level set for the FET cells 310, 312 to adjust the current flowing through them. Other aspects of the SSPCs 302, 306 are not shown as not being necessary for an understanding of this subject matter. In contrast, other approaches may involve new circuit board designs to achieve the output rated switches at the output connector 318.

In one form, it is generally contemplated that the single output current rating is different than the current ratings of the individual SSPCs 302, 306. In many forms, it is contemplated that the single output current rating is greater than each of the first and second SSPC current ratings. For example, the single output current rating may be the sum of the first and second current ratings. However, in other forms, it is contemplated that the single output current rating could be less than the first and second SSPC current ratings or may be based on certain specific factors. For example, the single output current rating may be greater than capacitive load charging of each of the first and second SSPCs 302, 306.

In one form, as part of the reconfiguration in FIG. 3, a configuration table for microprocessor 324 may be updated. In one form, there may be a single configuration table for multiple SSPCs. It is generally assumed that, prior to reconfiguration, the configuration table maps the individual SSPCs and identifies and designates the output of each individual SSPC 302, 306. As part of the reconfiguration, the configuration table may be updated to identify and designate a single switched output 305 for the combination of two SSPCs 302, 306. For example, the configuration table may include configuration data indicating whether a particular SSPC is enabled or disabled for a particular power distribution unit, which may be updated to add or subtract one or more paralleled SSPCs relative to a single switched output for that unit. This update to the configuration table can be completed with little to no change in software. In other words, the combination of SSPCs into parallel groups can be done through updating the configuration table and with little or no changes to the source code or circuit board design. In this regard, a control circuit (such as control circuit 301 addressed below) may be configured to access the configuration table that identifies and defines the first and second SSPCs 302, 306 as a single SSPC with a single output and a single output current rating.

The configuration data may also include intended ranges and values for different SSPC arrangements and parameters, such as, for example, input voltage, output voltage, and current, which parameters may be monitored and controlled for protection of the SSPCs. In some forms, it is contemplated that multiple configuration tables may be used for the power distribution unit with numerous SSPCs. The update to the configuration table(s) may allow for quicker implementation, lower development costs, better scalability, and/or more flexibility of power distribution units.

Next, as addressed above, the reconfigured SSPCs 302, 306 are operated in linear mode to avoid nuisance trips and allow current sharing between the SSPCs 302, 306. A nuisance trip may shut off power to an SSPC when there may be an incorrect indication of an overload. Linear mode generally refers to the operation of a switch, such as, for example, a FET or MOSFET, in a current saturation region. In this current saturation region, the current may reach a maximum value and may be independent of certain voltage changes. In this mode of operation, assuming a MOSFET, the drain current of the MOSFET may be proportional to the drain-source voltage, and it may act as a gate voltage controlled current source. In this mode, the MOSFET may be used to provide a slow turn on of the MOSFET and to circumvent high incoming currents. A microprocessor (such as microprocessor 324) may be used to sense the current and control the current flow by adjusting the MOSFET gate to source voltage V_GS. This voltage may be gradually increased until the full current flows, and the MOSFET is no longer operating in linear mode.

The system 300 includes a control circuit 301 operatively coupled to the first SSPC 302 and the second SSPC 306. The control circuit 301 is configured to control switching of the first and second SSPCs 302, 306. In one aspect, the control circuit 301 is configured to turn on the first and second SSPCs 302, 306 in a synchronized manner and approximately simultaneously. In this regard, the term "approximately simultaneously" generally refers to a difference on the order of microseconds (such as, for example, less than ten microseconds) between the switching components 314, 316 being turned on.

It is generally contemplated that the control circuit 301 may, for example, include the single microprocessor 324 controlling multiple SSPCs 302, 306, in conjunction with a fast communication bus 326. Combined with the software architecture, a low latency or delay, such as on the order of microseconds, may be achieved. The SSPCs in a group are effectively turned on and off at the same time, which achieves current sharing. In other forms, multiple processors may be used to control the multiple SSPCs. Further, it should be understood that, although this example shows two SSPCs 302, 306, in other forms, additional SSPCs may also be combined together, as addressed below.

In this context, the term control circuit refers broadly to any microcontroller, computer, integrated circuit (such as a field-programmable gate array), or processor-based device with processor, memory, and programmable input/output peripherals, alone or in combination, which is generally designed to govern the operation of other components and devices. It is further understood to include common accompanying accessory devices, including external memory, transceivers for communication with other components and devices, etc. These architectural options should be understood and are not described further here. The control circuit may be configured (for example, by using corresponding programming, instructions, and algorithms stored in a memory) to conduct one or more of the steps, actions, and/or functions described herein.

The control circuit may include a memory, a data bus, and/or a network interface for accessing a wireless network(s). The memory is a non-transitory storage medium that can, for example, store computer instructions that cause the control circuit to operate as described herein, when the instructions are executed. Further, the data bus and/or network interface may enable the control circuit to communicate with other elements (both internal and external to the system), such as, for example, via point-to-point RS485 links, as is well understood in the art. The network interface can communicatively couple the control circuit to the wireless network and whatever other networks may be appropriate for the circumstances. The control circuit may make use of and/or operate in conjunction with databases. In some forms, the functionalities of the control circuit may be implemented on a plurality of processor devices, such as, for example, communicating with one another on a network.

In this form, the control circuit 301 is configured to operate each of the first and second SSPCs 302, 306 in linear mode to share current between the first and second SSPCs 302, 306. In this form, linear mode operation causes the first and second SSPCs 302, 306 to share current without one of them electrically tripping before the other. In one aspect, in effect, the first and second solid state power controllers may operate as a single switch without one of the first and second solid state power controllers electrically tripping before the other. In this form, the first and second SSPCs 302, 306 each include switching components 314, 316, which may, for example, be in the form of transistors (such as, without limitation, MOSFETs), respectively, that are connected in parallel. In linear mode operation, in this example, the current flow through each SSPC is entirely controlled by the voltage at the gate of the corresponding MOSFET.

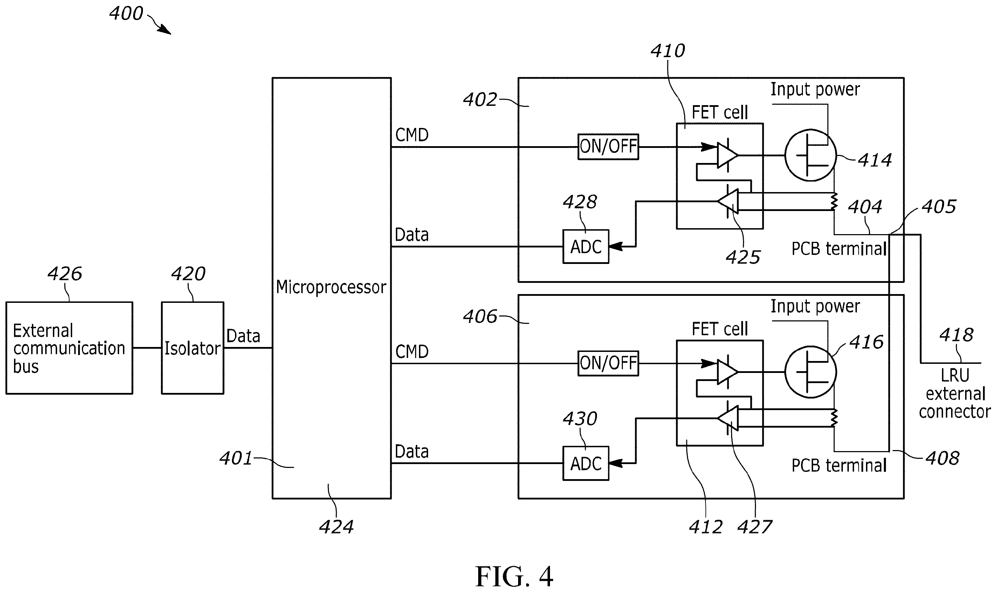

FIG. 4 shows another example of SSPCs 402, 406 reconfigured and converted to a single switched output 405. In the system 400 of FIG. 4, a first SSPC 402 has a first output 404 and a first current rating, and a second SSPC 406 has a second output 408 and a second current rating. In this example, the two SSPCs 402, 406 include FET cells 410, 412 and FET switching components 414, 416, respectively. In this form, the switching components 414, 416 are in the form of P-type FETs (in contrast, to the N-type FETs of system 300 above). Although this particular example uses P-type FETs, it should be understood that any of various types of transistors (such as BJTs, JFETs, MOSFETs, IGBTs, etc.) and other types of SSPCs may be used.

FIG. 4 uses components similar to those shown in FIG. 3 above. The circuits have some modification in their arrangement based on the use of P-type FETs, rather than N-type FETS. As can be seen, FIG. 4 includes a single isolator 420 between the external communications bus 426 and the microprocessor 424, as appropriate for P-type FETs. The other components are generally similar and may include, without limitation, control circuit 401, amplifiers 425, 427, ADCs 428, 430, output connector 418, etc. As can be seen, the reference numerals in FIG. 4 are generally similar to corresponding reference numerals in FIG. 3.

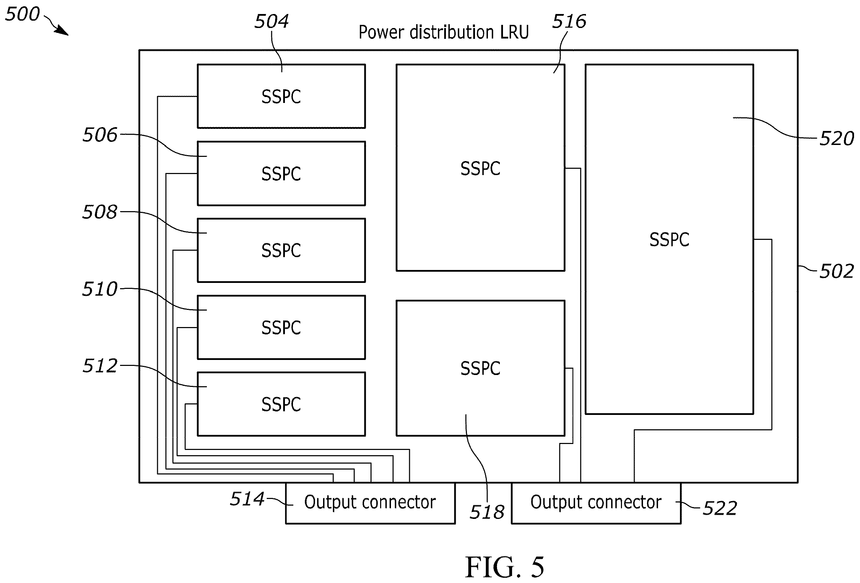

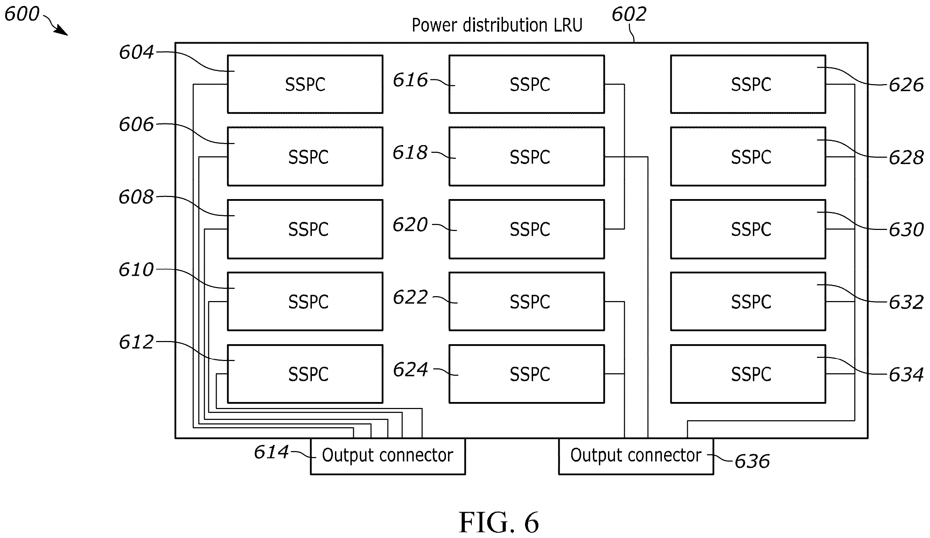

FIGS. 5 and 6 show additional examples of the reconfigurability of multiple SSPCs. FIGS. 5 and 6 are simplified illustrations and only show the output power of the reconfigured SSPCs, not the input side, as was addressed above. FIG. 5 shows a first example of a system 500 with a possible reconfiguration of individual SSPCs in a power distribution unit 502 (or line replaceable unit (LRU)). As can be seen, five SSPCs 504, 506, 508, 510, 512 have been coupled to one output connector 514. Further, three SSPCs (SSPC 516, SSPC 518, and SSPC 520) have been coupled to a second output connector 522.

FIG. 6 shows a second example of a system 600 with another possible reconfiguration of individual SSPCs in a power distribution unit 602. As can be seen five SSPCs 604, 606, 608, 610, 612 have been coupled to one output connector 614. Further, ten SSPCs 616, 618, 620, 622, 624, 626, 628, 630, 632, 634 have been coupled to a second output connector 636. In FIG. 6, there are only three switched outputs connected to the second output connector 636, creating three increased capability switched outputs from the ten SSPCs connected in parallel combinations. As should be understood, these examples are just two examples, and many other combinations and arrangements of SSPCs, switched outputs, and output connectors are possible.

As shown by these two examples, the outputs of three or more SSPCs may be coupled at a single switched output. For instance, at a power distribution unit 101, the system may include a first SSPC (such as, for example, SSPC 516) with a first output and first current rating, a second SSPC (such as, for example, SSPC 518) with a second output and second current rating, a third SSPC (such as, for example, SSPC 520) with a third output and a third current rating. The outputs of the three SSPCs may be coupled to form a single switched output. Further, an output connector at the power distribution unit may be operatively coupled to the single switched output (three coupled outputs), and in form, the single switched output may be at the output connector. In one form, a single output current rating of the single switched output and/or output connector may be equal to a sum of the first, second, and third current ratings. Although this example addressed the coupling of three SSPC outputs to form a single switched output, it should be understood that four or more outputs may be coupled in this manner.

Linear mode operation protects the SSPC from nuisance tripping based on transient spikes when the switch is turned on. Linear mode manages the inrush from capacitive loads or other transients, such as, for example, lightning, to avoid nuisance tripping. In normal operation the FET gate voltage, V_GS, is increased to turn the FET on and minimize the FET's resistance, RDS(on). In contrast, in linear mode, V_GS may be controlled with a feedback loop, dependent on the output current, and when the switch is in linear mode, the RDS(on) increases and manages inrush, but dissipates energy in the FET.

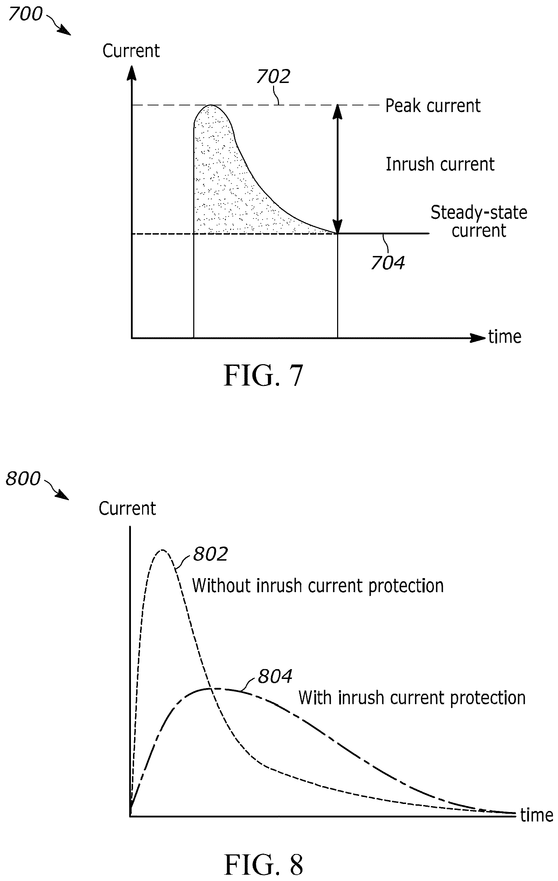

An effect of linear mode is shown in the graphs 700, 800 in Figures 7 and 8. Graphs 700 and 800 show current versus time. As can be seen in FIG. 7, there is an inrush of current reaching a peak current 702 before settling into a steady-state current 704. As can be seen in FIG. 8, the inrushing current without current protection 802 (e.g., without linear mode) is generally higher than the inrushing current with current protection 804 (e.g., with linear mode).

One advantage of reconfiguration is that it provides flexibility to convert an existing circuit board design with individual SSPCs into a unit with a reconfigured design with fewer outputs, but outputs with improved capability. This reconfiguration involves relatively few changes in hardwiring or source code, which allows the reconfiguration to be conducted fairly quickly and at low cost. In contrast, creating a new customized SSPC circuit arrangement may involve a significant redesign of the circuit board. Linear mode helps the SSPCs experience transients without nuisance trips.

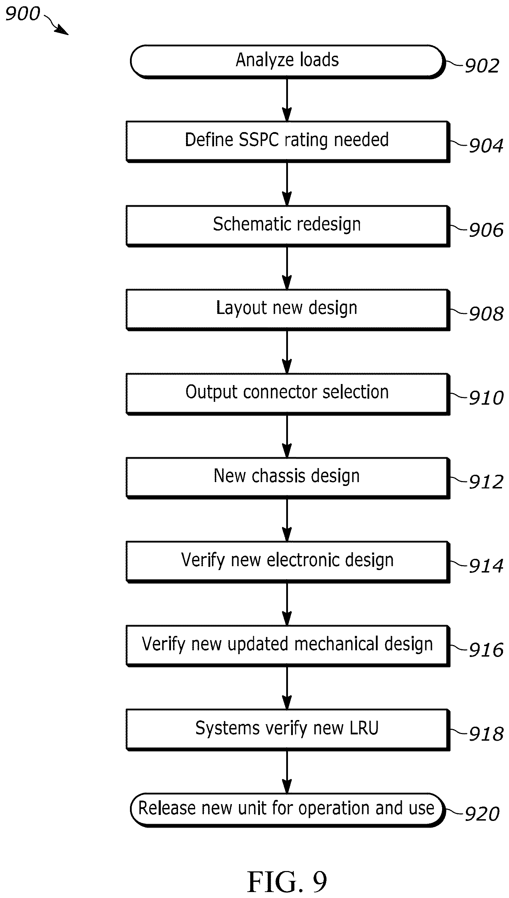

FIG. 9 shows a flow diagram of a process 900 that would be needed to create a new customized SSPC circuit arrangement, e.g., redesigning an existing circuit arrangement to the new redesign. At blocks 902 and 904, the loads are analyzed, and the new SSPC rating that is needed is defined. At blocks 906 and 908, the schematic redesign is determined, the new circuit design is laid out. At blocks 910 and 912, an output connector is selected, and a new chassis is designed. For example, a new chassis may be needed to address different heat sinking for the different FETs (larger FETS may use more heat).

However, as this is a new design, a number of additional steps may also be taken to verify and test the new design. At blocks 914 and 916, the new electronic design is verified, and the new updated mechanical design is verified. At block 918, systems verify the new LRU, or power distribution unit including SSPCs. For example, this verification and testing may determine whether the circuit performs, whether SSPCs trip at the right time during operation, and whether the overall unit functions properly. Following this verification and testing, at block 920, the new unit may be released for operation and use.

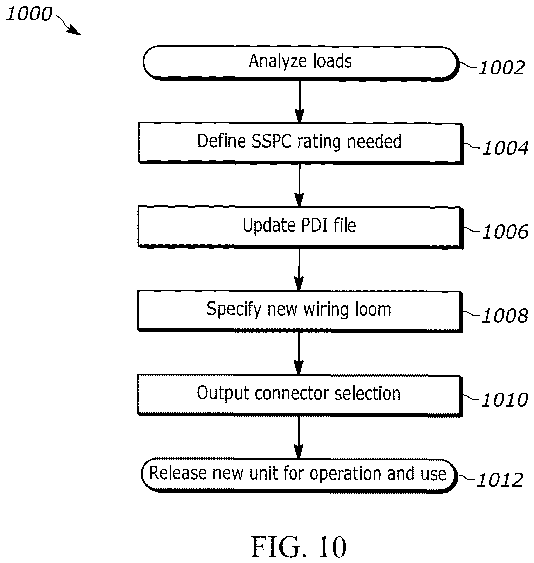

FIG. 10 shows a process 1000 where the design has been reconfigured and not redesigned. At blocks 1002 and 1004, the loads are analyzed, and the new SSPC rating that is needed is defined. At block 1006, the PDI file of a microprocessor is updated. In one form, it is contemplated that a configuration table in a PDI file is updated to indicate and designate a combined SSPC with a single switched output. At blocks 1008 and 1010, a new wiring loom is specified, and an output connector is selected. At block 1012, the reconfigured unit may be released for operation and use. In one form, the outputs of the individual SSPCs are coupled to a single switched output at the output connector. As can be seen, as there is a different switch mix that uses the same arrangement of individual SSPCs, only the PDI file and the wiring loom need to change. As this is not a new design, various time-consuming and costly verification and testing steps may be avoided.

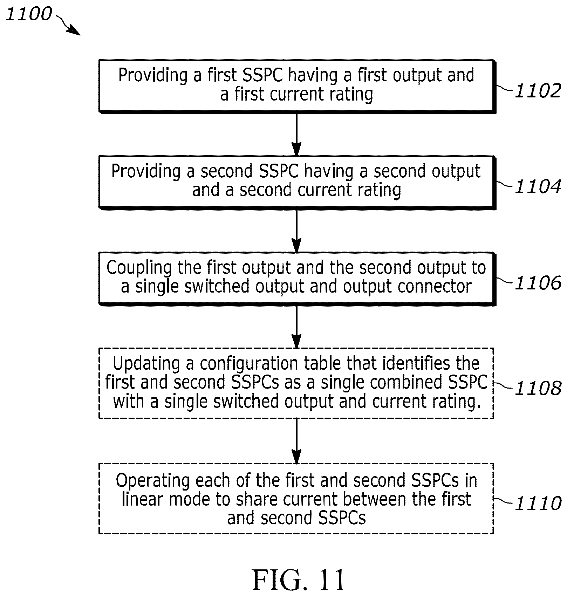

FIG. 11 is a flow diagram of a process 1100 for combining outputs of SSPC into a single output. In one form, it is contemplated that the SSPCs are used in a power distribution unit in a high current, high voltage setting, such as, for example, an aerospace application. The process 1100 may use some or all of the components described above in connection with systems 100, 300, 500, and 600 and steps of processes 900 and 1000. The above description of these systems and processes is incorporated herein.

At block 1102, a first SSPC is provided having a first output and a first current rating. At block 1104, a second SSPC is provided having a second output and a second current rating. In one form, it is contemplated that two individual SSPCs may be part of an existing circuit design intended for use in a power distribution unit. For example, they may be intended for use in an aerospace application to receive power from a power source and distribute power, such as via switching, to two systems.

At block 1106 the first output and the second output are coupled to an output connector. In one form, the two SSPCs are being combined to provide a single switched output of a higher current rating. Although this example refers to two SSPCs, it should be understood that any number of outputs of SSPCs may be combined in this manner to a single switched output. In one form, block 1106 describes the little modification to the hard wiring for the conversion.

At block 1108, a configuration table may be updated that identifies the first and second SSPCs as a single combined SSPC with a single switched output and current rating. It is generally assumed that, prior to this update, the configuration table may identify and designate the output of each individual SSPC. As part of the reconfiguration, the configuration table may be updated to identify and designate a single switched output for the combination of two SSPCs. For example, the configuration table may include configuration data indicating whether a particular SSPC is enabled or disabled for a particular power distribution unit, which may be updated to add or subtract one or more paralleled SSPCs relative to a single switched output for that unit. In other forms, it is contemplated that multiple configuration tables may be used. This update to the configuration table describes the little modification to the software for the conversion.

At block 1110, the first and second SSPCs may be operated in linear mode to share current between the first and second SSPCs. This linear mode operation helps prevent nuisance trips of one or both SSPCs that may result when attempting to combine SSPCs in parallel. In one form, it is contemplated that a single microprocessor may be used to control the two SSPCs so that they turn on at approximately the same time. In other forms, multiple processors may be used.

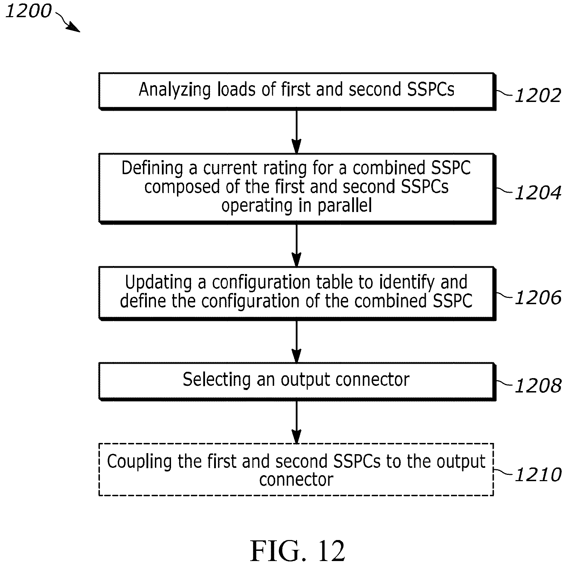

FIG. 12 is a flow diagram of a process 1200 for converting operation of SSPCs into a single switched output. In one form, it is contemplated that there is an existing circuit board with multiple SSPCs. It is desired to convert operation of the multiple SSPCs into a single switched output, rather than designing a new circuit. In one aspect, the process 1200 (and the previous processes 1000 and 1100) may involve combining two or more SSPCs to act as a single output SSPC. The process 1200 may use some or all of the components described above in connection with systems 100, 300, 500, and 600 and steps of processes 900, 1000, and 1100. The above description of these systems and processes is incorporated herein.

At block 1202, the loads of first and second SSPC are analyzed. Then, at block 1204, a current rating is defined for a switched output composed of the first and second SSPCs operating in parallel. It is generally contemplated that this current rating is based on the SSPC loads. At block 1206, a configuration table is updated to identify and define the configuration of the switched output. At block 1208, an output connector is selected. At block 1210, the outputs of the first and second SSPCs are coupled to the output connector. It is generally contemplated that these steps may be performed to combine the operation of any desired number of SSPCS, not just two SSPCs.

Further aspects of the disclosure are provided by the subject matter of the following clauses:

There is provided a system for combining solid state power controllers into a single output, the system including: a power distribution unit configured for operatively coupling to a power source and a plurality of loads; a first solid state power controller at the power distribution unit, the first solid state power controller having a first output and a first current rating; a second solid state power controller at the power distribution unit, the second solid state power controller having a second output and a second current rating; a single switched output at the power distribution unit operatively coupled to the first and second solid state power controllers, the single switched output having a single output current rating; and an output connector at the power distribution unit operatively coupled to the single switched output.

The system of the preceding clause may further include a control circuit operatively coupled to the first and second solid state power controllers, the control circuit configured to control switching of the first and second solid state power controllers.

The system of one or more of the preceding clauses may further include that the control circuit is configured to turn on the first and second solid state power controllers approximately simultaneously.

The system of one or more of the preceding clauses may further include that the control circuit is configured to operate each of the first and second solid state power controllers in linear mode to share current between the first and second solid state power controllers.

The system of one or more of the preceding clauses may further include that the first and second solid state power controllers operate as a single switch without one of the first and second solid state power controllers electrically tripping before the other.

The system of one or more of the preceding clauses may further include that the first solid state power controller includes a first field effect transistor (FET) with the first current rating, the second solid state power controller includes a second FET with the second current rating, and the first and second FETs are arranged in parallel.

The system of one or more of the preceding clauses may further include that the control circuit is configured to access a configuration table that identifies and defines the first and second solid state power controllers as a single solid state power controller with a single output and the single output current rating.

The system of one or more of the preceding clauses may further include that the single output current rating is greater than each of the first and second SSPC current ratings.

The system of one or more of the preceding clauses may further include that the single output current rating is a sum of the first and second current ratings.

The system of one or more of the preceding clauses may further include that the single output current rating is greater than capacitive load charging of each of the first and second solid state power controllers.

The system of one or more of the preceding clauses further including a third solid state power controller at the power distribution unit, the third solid state power controller having a third output and a third current rating; the output connector at the power distribution unit being operatively coupled to the third output, the single output current rating of the output connector being equal to a sum of the first, second, and third current ratings.

There is further provided a method for combining solid state power controllers into a single output, the method including: providing a first solid state power controller at a power distribution unit, the first solid state power controller having a first output and a first current rating, the power distribution unit being operatively coupled to a power source and a plurality of loads; providing a second solid state power controller at the power distribution unit, the second solid state power controller having a second output and a second current rating; and operatively coupling the first and second solid state power controllers to a single switched output at the power distribution unit, the single switched output having a single output current rating.

The method of the preceding clause may further include providing a control circuit operatively coupled to the first and second solid state power controllers, the control circuit controlling switching of the first and second solid state power controllers.

The method of any of the preceding clauses may further include that the control circuit turns on the first and second solid state power controllers approximately simultaneously.

The method of any of the preceding clauses may further include that the control circuit operates each of the first and second solid state power controllers in linear mode to share current between the first and second solid state power controllers.

The method of any of the preceding clauses may further include that the first and second solid state power controllers operate as a single switch without one of the first and second solid state power controllers electrically tripping before the other.

The method of any of the preceding clauses may further include that the first solid state power controller includes a first FET with the first current rating, the second solid state power controller includes a second FET with the second current rating, and the first and second FETs are connected in parallel.

The method of any of the preceding clauses may further include that the control circuit accesses a configuration table that identifies the first and second solid state power controllers as a single solid state power controller with a single output and the single output current rating.

There is further provided a method for converting operation of solid state power controllers into a single output solid state power controller, the method including:
analyzing loads of a first solid state power controller and a second solid state power controller at a power distribution unit, each solid state power controller having its own output and current rating, the first and second solid state power controllers being operatively coupled to a control circuit configured to control switching of the first and second solid state power controllers; defining a current rating for the single output solid state power controller; updating a configuration table identifying each of the first and second solid state power controllers, the configuration table being updated to identify and define a single output solid state power controller with an output at an output connector and with a single output current rating; selecting an output connector for the single output current rating; and operatively coupling the outputs of the first and second solid state power controllers to the output connector.

The method of the preceding clause may further include that the control circuit operates each of the first and second solid state power controllers in linear mode to share current between the first and second solid state power controllers; wherein the first and second solid state power controllers operate as a single switch without one of the first and second solid state power controllers electrically tripping before the other.

A system for combining solid state power controllers into a single output, the system comprising: a power distribution unit configured for operatively coupling to a power source and a plurality of loads; a first solid state power controller at the power distribution unit, the first solid state power controller having a first output and a first current rating; a second solid state power controller at the power distribution unit, the second solid state power controller having a second output and a second current rating; and a single switched output at the power distribution unit operatively coupled to the first and second solid state power controllers, the single switched output having a single output current rating.

The system of any preceding clause, further comprising: a control circuit operatively coupled to the first and second solid state power controllers, the control circuit configured to control switching of the first and second solid state power controllers.

The system of any preceding clause, wherein the control circuit is configured to turn on the first and second solid state power controllers approximately simultaneously.

The system of any preceding clause, wherein the control circuit is configured to operate each of the first and second solid state power controllers in linear mode to share current between the first and second solid state power controllers.

The system of any preceding clause, wherein the first and second solid state power controllers operate as a single switch without one of the first and second solid state power controllers electrically tripping before the other.

The system of any preceding clause, wherein the first solid state power controller comprises a first field effect transistor (FET) with the first current rating, the second solid state power controller comprises a second FET with the second current rating, and the first and second FETs are arranged in parallel.

The system of any preceding clause, wherein the control circuit is configured to access a configuration table that identifies and defines the first and second solid state power controllers as a single solid state power controller with a single output and the single output current rating.

The system of any preceding clause, wherein the single output current rating is greater than each of the first and second solid state power controller current ratings.

The system of any preceding clause, wherein the single output current rating is a sum of the first and second current ratings.

The system of any preceding clause, wherein the single output current rating is greater than capacitive load charging of each of the first and second solid state power controllers.

The system of any preceding clause, further comprising: an output connector at the power distribution unit operatively coupled to the single switched output; a third solid state power controller at the power distribution unit, the third solid state power controller having a third output and a third current rating; and the output connector at the power distribution unit being operatively coupled to the third output, the single output current rating of the output connector being equal to a sum of the first, second, and third current ratings.

A method for combining solid state power controllers into a single output, the method comprising: providing a first solid state power controller at a power distribution unit, the first solid state power controller having a first output and a first current rating, the power distribution unit being operatively coupled to a power source and a plurality of loads; providing a second solid state power controller at the power distribution unit, the second solid state power controller having a second output and a second current rating; operatively coupling the first and second solid state power controllers to a single switched output at the power distribution unit, the single switched output having a single output current rating.

The method of any preceding clause, further comprising: providing a control circuit operatively coupled to the first and second solid state power controllers, the control circuit controlling switching of the first and second solid state power controllers.

The method of any preceding clause, wherein the control circuit turns on the first and second solid state power controllers approximately simultaneously.

The method of any preceding clause, wherein the control circuit operates each of the first and second solid state power controllers in linear mode to share current between the first and second solid state power controllers.

The method of any preceding clause, wherein the first and second solid state power controllers operate as a single switch without one of the first and second solid state power controllers electrically tripping before the other.

The method of any preceding clause, wherein the first solid state power controller comprises a first FET with the first current rating, the second solid state power controller comprises a second FET with the second current rating, and the first and second FETs are connected in parallel.

The method of any preceding clause, wherein the control circuit accesses a configuration table that identifies the first and second solid state power controllers as a single solid state power controller with a single output and the single output current rating.

A method for converting operation of solid state power controllers into a single output solid state power controller, the method comprising: analyzing loads of a first solid state power controller and a second solid state power controller at a power distribution unit, each solid state power controller having a corresponding output and current rating, the first and second solid state power controllers being operatively coupled to a control circuit configured to control switching of the first and second solid state power controllers; defining a current rating for the single output solid state power controller; updating a configuration table identifying each of the first and second solid state power controllers, the configuration table being updated to identify and define a single output solid state power controller with an output at an output connector and with a single output current rating; selecting an output connector for the single output current rating; and operatively coupling the outputs of the first and second solid state power controllers to the output connector.

The method of any preceding clause, wherein: the control circuit operates each of the first and second solid state power controllers in linear mode to share current between the first and second solid state power controllers; and the first and second solid state power controllers operate as a single switch without one of the first and second solid state power controllers electrically tripping before the other.

It will be understood that various changes in the details, materials, and arrangements of parts and components which have been herein described and illustrated to explain the nature of the disclosure may be made by those skilled in the art within the principle and scope of the appended claims. Furthermore, while various features have been described with regard to particular embodiments, it will be appreciated that features described for one embodiment also may be incorporated with the other described embodiments.

## Claims

1. A system (100, 300) for combining solid state power controllers into a single output, the system comprising:
a power distribution unit (101) configured for operative coupling to a power source (104) and a plurality of loads (106);
a first solid state power controller (302) at the power distribution unit, the first solid state power controller (302) having a first output (304) and a first current rating;
a second solid state power controller (306) at the power distribution unit, the second solid state power controller (306) having a second output (308) and a second current rating; and
a single switched output (305) at the power distribution unit operatively coupled to the first and second solid state power controllers (302, 306), the single switched output (305) having a single output current rating.

2. The system of claim 1, further comprising:
a control circuit (301) operatively coupled to the first and second solid state power controllers (302, 306), the control circuit configured to control switching of the first and second solid state power controllers (302, 306).

3. The system of claims 1 or 2, wherein the control circuit (301) is configured to turn on the first and second solid state power controllers (302, 306) approximately simultaneously.

4. The system of any of the preceding claims, wherein the control circuit (301) is configured to operate each of the first and second solid state power controllers (302, 306) in linear mode to share current between the first and second solid state power controllers (302, 306).

5. The system of any of the preceding claims, wherein the first and second solid state power controllers (302, 306) operate as a single switch without one of the first and second solid state power controllers (302, 306) electrically tripping before the other.

6. The system of any of the preceding claims, wherein the first solid state power controller (302) comprises a first field effect transistor (FET) (310) with the first current rating, the second solid state power controller (306) comprises a second FET (312) with the second current rating, and the first and second FETs (310, 312) are arranged in parallel.

7. The system of any of the preceding claims, wherein the control circuit (301) is configured to access a configuration table that identifies and defines the first and second solid state power controllers (302, 306) as a single solid state power controller with a single output and the single output current rating.

8. The system of any of the preceding claims, wherein the single output current rating is greater than each of the first and second SSPC current ratings, the single output current rating is a sum of the first and second current ratings, and/or the single output current rating is greater than capacitive load charging of each of the first and second solid state power controllers (302, 306).

9. The system of any of the preceding claims, further comprising:
an output connector (514) at the power distribution unit operatively coupled to the single switched output;
a third solid state power controller (504, 506, 508) at the power distribution unit, the third solid state power controller having a third output and a third current rating; and
the output connector (514) at the power distribution unit being operatively coupled to the third output, the single output current rating of the output connector being equal to a sum of the first, second, and third current ratings.

10. A method (1100) for combining solid state power controllers into a single output, the method comprising:
providing a first solid state power controller (302) at a power distribution unit (101), the first solid state power controller (302) having a first output (304) and a first current rating, the power distribution unit (101) being operatively coupled to a power source (104) and a plurality of loads (106);
providing a second solid state power controller (306) at the power distribution unit, the second solid state power controller (306) having a second output (308) and a second current rating;
operatively coupling the first and second solid state power controllers (302, 306) to a single switched output (305) at the power distribution unit, the single switched output (305) having a single output current rating.

11. The method of claim 10, further comprising:
providing a control circuit (301) operatively coupled to the first and second solid state power controllers (302, 306), the control circuit (301) controlling switching of the first and second solid state power controllers (302, 306).

12. The method of claims 10 or 11, wherein the control circuit (301) turns on the first and second solid state power controllers (302, 306) approximately simultaneously.

13. The method of any of claims 10 to 12, wherein the control circuit (301) operates each of the first and second solid state power controllers (302, 306) in linear mode to share current between the first and second solid state power controllers (302, 306).

14. The method of any of claims 10 to 13, wherein the first and second solid state power controllers (302, 306) operate as a single switch without one of the first and second solid state power controllers (302, 306) electrically tripping before the other.

15. The method of any of claims 10 to 14, wherein the first solid state power controller (302) comprises a first FET (310) with the first current rating, the second solid state power controller (306) comprises a second FET (312) with the second current rating, and the first and second FETs (310, 312) are connected in parallel; and/or wherein the control circuit (301) accesses a configuration table that identifies the first and second solid state power controllers (302, 306) as a single solid state power controller with a single output and the single output current rating.
